# EUROPEAN PATENT SPECIFICATION

(11) **EP 3 232 301 B1**
(45) Date of publication and mention of the grant of the patent: **22.04.2020**
(21) Application number: 15832786.6
(22) Date of filing: 30.10.2015
(51) Int. Cl.: G06F 3/0488, H04M 1/02, H04M 1/725

(54) **MOBILE TERMINAL AND VIRTUAL KEY PROCESSING METHOD**
MOBILES ENDGERÄT UND VERARBEITUNGSVERFAHREN FÜR VIRTUELLEN TASTEN
TERMINAL MOBILE ET PROCÉDÉ DE TRAITEMENT DE TOUCHES VIRTUELLES

(30) Priority: 07.01.2015 CN 201510008097; 19.01.2015 CN 201510025615
(43) Date of publication of application: 18.10.2017
(73) Proprietor: Xiaomi Inc., Beijing 100085 (CN)
(72) Inventor: JIANG, Zhongsheng, Beijing 100085 (CN); YANG, Kun, Beijing 100085 (CN); TAO, Jun, Beijing 100085 (CN)
(74) Representative: Robson, Aidan John
(86) International application number: PCT/CN2015/093409
(87) International publication number: WO 2016/110146

(56) References cited:
- EP-A2- 2 284 674
- CN-A- 101 715 020
- CN-A- 102 455 806
- CN-A- 103 258 171
- CN-A- 103 838 417
- CN-A- 104 571 709
- US-A1- 2010 134 433
- US-A1- 2011 057 903
- US-A1- 2013 215 060

## Description

### TECHNICAL FIELD

The present disclosure relates to the field of computer processing, and more particularly, to a mobile terminal, a method for processing a virtual button.

### BACKGROUND

With the development of electronic technology, the mobile terminal has been widely used, and the upgrade thereof is very fast. The input into the terminal has been realized by a keyboard initially, then by a touch screen, and now by a more advanced full touch screen, which becomes more and more intelligent and interactive. For the mobile terminal with a touch screen, a lot of the functions of physical buttons may be realized by virtual buttons in the touch screen. The user may perform operations on the virtual buttons via clicking the virtual buttons or by using other gestures. On occasions, it is possible for a user to trigger or activate more than one virtual button simultaneously.

US2010/0134433A1 discloses an information-processing apparatus includes a display unit having a display screen, and processing means for detecting a touched position on the display screen and performing a processing operation corresponding to the touched position.

US 2013/0215060A1 discloses a mobile terminal apparatus and display method for touch panel in mobile terminal apparatus. In the mobile terminal apparatus that can be operated with a touch panel, a picture is displayed on the touch panel in a manner suitable for a way of holding to improve the operability of the touch panel.

US2011/0057903A1 discloses an input apparatus, which includes: a pressure detecting unit which detects press pressure of an operational body; and an input control unit which varies a selection state of the one or more input candidates.

### SUMMARY

In order to overcome problems existing in the related art, embodiments of the present disclosure provide a mobile terminal, a method for processing a virtual button.

According to a first aspect of embodiments of the present disclosure, there is provided a mobile terminal according to claim 1.

According to a second aspect of embodiments of the present disclosure, there is provided a method for processing a virtual button according to claim 5.

Further aspects of the invention are outlined in the dependent claims. Embodiments referred to herein which do not fall within the scope of the claims do not form part of the present invention.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram showing a mobile terminal in the related art;
Fig. 2 is a block diagram showing a mobile terminal according to an example embodiment;
Fig. 3 is a block diagram showing a mobile terminal according to an example embodiment;
Fig. 4 is a block diagram showing a mobile terminal according to an example embodiment;
Fig. 5 is a flow chart showing a method for processing a virtual button according to an example embodiment;
Fig. 6 is a block diagram showing a device for processing a virtual button according to an example embodiment; and
Fig. 7 is a block diagram showing a device according to an example embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

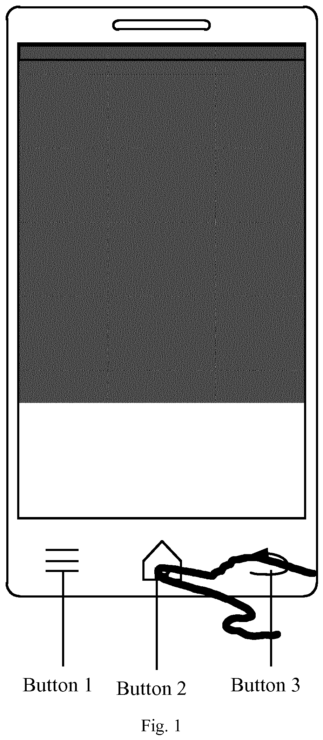

In the related art, most mobile terminals have a touch screen. Virtual buttons in the touch screen may be used to realize functions of many original physical buttons. Different to the physical buttons, the virtual buttons may be triggered or activated via touch sensing instead of a large pressure. However, there may be a problem. As shown in Fig. 1, there are a virtual button 1, a virtual button 2 and a virtual button 3 arranged from left to right. In a case that the user holds the mobile terminal with his/her right hand, when the user clicks the button 1 using a finger of his/her right hand, he/she may touch the button 2 or the button 3 inadvertently. The mobile terminal may therefore process incorrectly the trigger of the button 2 or the button 3.

In order to solve this problem, the touch panel may be provided with a touch-sensitive area in embodiments of the present disclosure. The processing priority of the virtual buttons may be adjusted via the touch-sensitive area, thus reducing the incorrect processing.

In embodiments of the present disclosure, the virtual buttons not only include virtual buttons in the display interface, the menu buttons in the control area, the home button and the back button may also be implemented by virtual buttons. The virtual buttons implemented by the touch-sensitive way are applicable to the embodiments of the present disclosure.

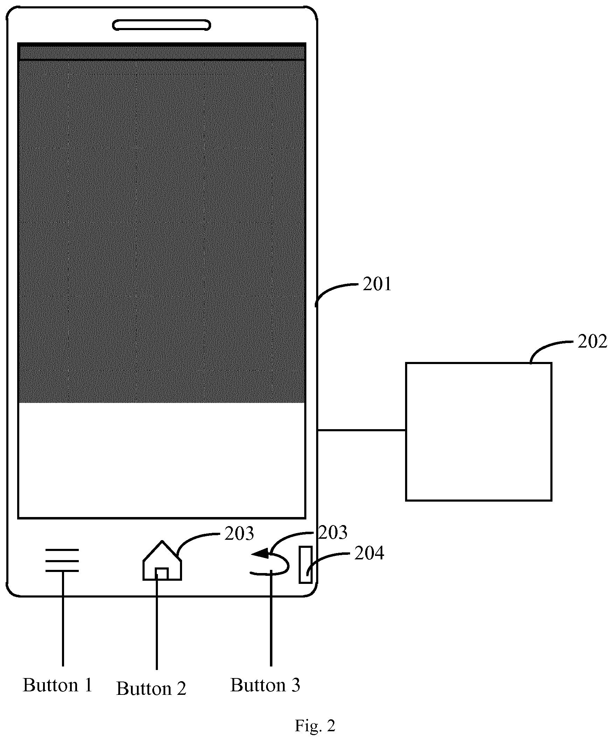

Fig. 2 is a block diagram showing a mobile terminal according to an example embodiment. As shown in Fig. 2, the mobile terminal includes a touch panel 201 and a touch processing chip 202.

The touch panel 201 includes a plurality of virtual buttons 203 and an auxiliary sensing area 204. The auxiliary sensing area 204 is located at one side of the touch panel 201.

A touch processing chip 202 is connected with the touch panel 201 and configured to process a trigger of a virtual button 203 of at least two virtual buttons 203 and far away from the auxiliary sensing area 204 if triggers of the at least two virtual buttons 203 and the auxiliary sensing area 204 are obtained simultaneously. The touch processing chip 202 may be a dedicated chip of touch buttons, or may be a general-purpose processing chip, for example, CPU.

The touch panel is provided with the auxiliary sensing area in this embodiment, Fig. 2 shows an example in which the auxiliary sensing area is located at the right side of the virtual buttons. If the user holds the mobile terminal using his/her right hand and touches the button 2 using a finger of his/her right hand, then each of the button 2, the button 3 and the auxiliary sensing area is likely to be triggered. The touch processing chip receives three trigger signals respectively from the button 2, the button 3 and the auxiliary sensing area. In this case, the distance of the button 2 from the auxiliary sensing area is farther from the auxiliary sensing area, so the touch processing chip may process the button 2 instead of the button 3, thus reducing the misoperation caused by incorrect touching on the button 3. Therefore, the virtual buttons may be processed more accurately.

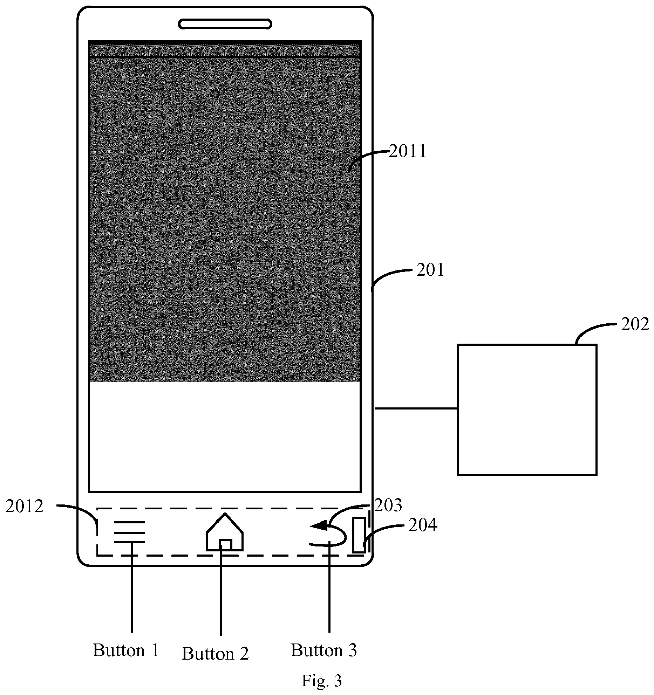

In an embodiment, as shown in Fig. 3, the touch panel 201 includes an interface area 2011 and a control area 2012. The plurality of virtual buttons are located in the control area. The plurality of virtual buttons may be the menu buttons, the home button, the back button, etc.

This embodiment can be applied to the interface area and the control area of the touch panel, in particular, the effects is better if the embodiment is applied to the control area.

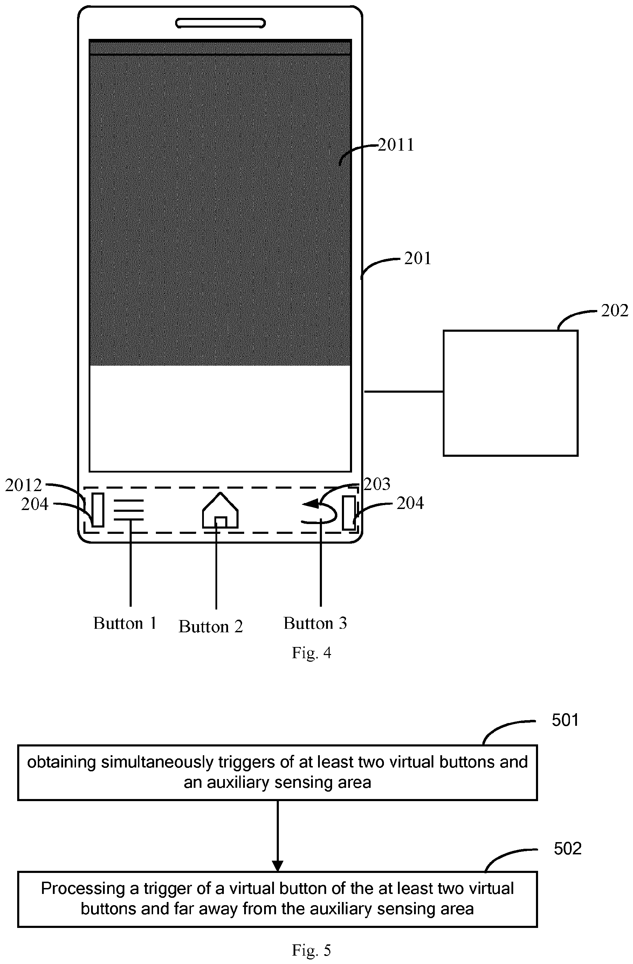

In an embodiment, as shown in Fig. 4, there are at least two auxiliary sensing areas that are respectively located at two sides of the plurality of virtual buttons and aligned with the plurality of virtual buttons in the control area.

In this embodiment, since the handedness of the users may be different, some user may be accustomed to hold the mobile terminal with his/her left hand, and some user may be accustomed to hold the mobile terminal with his/her right hand. If the user holds the mobile terminal with his/her left hand and touches the virtual buttons using a finger of his/her left hand, the auxiliary sensing area located at the left side of the control area takes effect. When a finger of the user's left hand touches the button 2, both the button 1 and the auxiliary sensing area located at the left side may be touched at the same time. Then the touch processing chip may ignore the touch on the button 1 and only process the trigger of the button 2 which is most distant from the auxiliary sensing area. If the user holds the mobile terminal with his/her right hand and touches the virtual buttons using a finger of his/her right hand, the auxiliary sensing area located at the right side of the control area takes effect. When a finger of the user's right hand touches the button 2, both the button 3 and the auxiliary sensing area located at the right side may be touched at the same time. Then the touch processing chip may ignore the touch on the button 3 and only process the trigger of the button 2 which is most distant from the auxiliary sensing area.

In other words, when receiving the trigger of the auxiliary sensing area located at the left side, the order of the virtual buttons arranged according to the processing priority of the virtual buttons from high to low is: the button 3, the button 2 and the button 1, i.e. processing the virtual buttons from far to near relative to the auxiliary induction area located at the left side. Similarly, when receiving the trigger of the auxiliary sensing area located at the right side, the order of the virtual buttons arranged according to the processing priority of the virtual buttons from high to low is: the button 1, the button 2 and the button 3, i.e. processing the virtual buttons from far to near relative to the auxiliary induction area located at the right side.

This embodiment may be suitable for the users with different handedness. Also, the auxiliary sensing area may be added according to different scenarios, so as to process the virtual buttons more accurately.

In an embodiment, the touch processing chip includes a plurality of comparators, and each comparator is configured to obtain a touch sensing signal for one virtual button; to determine whether an intensity of the touch sensing signal is greater than an intensity threshold; and to obtain a trigger of a virtual button if the intensity of the touch sensing signal obtained for the virtual button is greater than the intensity threshold.

This embodiment may identify the trigger of the touch sensing signal more accurately by the comparators, such that the incorrect processing caused by the misoperation may be reduced.

Fig. 5 is a flow chart showing a method for processing a virtual button according to an example embodiment, and the method may be realized by a mobile terminal. As shown in Fig. 5, the method includes following steps.

In step 501, triggers of at least two virtual buttons and an auxiliary sensing area are simultaneously obtained.

In step 502, a trigger of a virtual button of the at least two virtual buttons and far away from the auxiliary sensing area is processed.

In an embodiment, obtaining simultaneously triggers of at least two virtual buttons includes:
obtaining a touch sensing signal for each virtual button;
determining whether an intensity of the touch sensing signal is greater than an intensity threshold;
obtaining the trigger of a virtual button if the intensity of the touch sensing signal obtained for the virtual button is greater than the intensity threshold.

The realization of processing the virtual buttons may be understood according to the description described above. This realization is implemented by the mobile terminal. In the following, the internal structure and functions of the device are described.

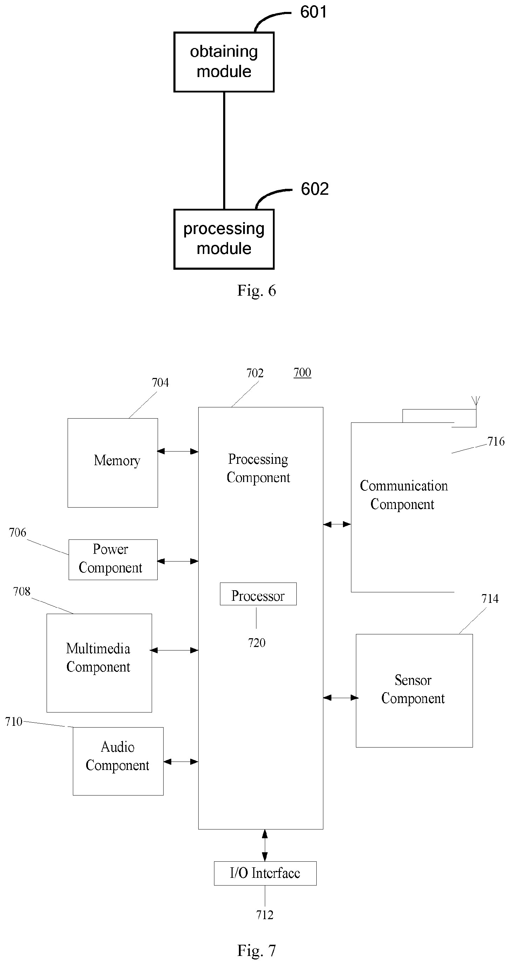

Fig. 6 is a block diagram showing a device for processing a virtual button according to an example embodiment. As shown in Fig. 6, the device includes an obtaining module 601 and a processing module 602.

The obtaining module 601 is configured to obtain simultaneously triggers of at least two virtual buttons and an auxiliary sensing area.

The processing module 602 is configured to process a trigger of a virtual button of the at least two virtual buttons and far away from the auxiliary sensing area.

In an embodiment, the obtaining module 601 includes an obtaining sub-module, a determining sub-module and a triggering sub-module.

The obtaining sub-module is configured to obtain a touch sensing signal for each virtual button.

The determining sub-module is configured to determine whether an intensity of the touch sensing signal is greater than an intensity threshold.

The triggering sub-module is configured to obtain the trigger of a virtual button if the intensity of the touch sensing signal obtained for the virtual button is greater than the intensity threshold.

With respect to the devices in the above embodiments, the specific manners for performing operations for individual modules therein have been described in detail in the embodiments regarding the methods, which are not elaborated herein again.

Fig. 7 is a block diagram showing a device 700 for controlling a mobile terminal according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714 and a communication component 716.

The processing component 702 typically controls overall operations of the device 700, such as the operations associated with display, telephone calls, data communications, camera operations, and recording operations. The processing component 702 may include one or more processors 720 to execute instructions so as to perform all or a part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, videos, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 is configured to provide power to various components of the device 700. The power component 706 may include a power management system, one or more power sources, and other components associated with the generation, control, and distribution of power in the device 700.

The multimedia component 708 includes a screen configured to provide an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum when the device 700 is in an operation mode such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a loud speaker to output audio signals.

The I/O interface 712 is configured to provide an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an on/off status of the device 700, relative positioning of components (e.g., a display screen and a keypad) of the device 700. The sensor component 714 may further detect a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may further include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate a wired or wireless communication between the device 700 and other terminals. The device 700 can access a wireless network based on a communication standard, such as WiFi, 2G, or 3G, or a combination thereof. In one exemplary embodiment, the communication component 716 receives a broadcast signal or broadcast associated information from an external broadcast control system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 700 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer readable storage medium including instructions, such as the memory 704 including instructions executable by the processor 720 in the device 700 to perform the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here.

## Claims

1. A mobile terminal, comprising:
a touch panel (201), comprising a plurality of virtual buttons (203) located in a control area of the touch panel, a first auxiliary sensing area and a second auxiliary sensing area, wherein the first auxiliary sensing area and the second auxiliary sensing area are located at first and second sides of the plurality of virtual buttons and aligned with the plurality of virtual buttons (203); and
a touch processing chip (202), connected with the touch panel (201) and configured to process a trigger of a virtual button of at least two of the plurality of virtual buttons (203) that is most distant from a triggered one of the first and second auxiliary sensing areas if triggers of the at least two of the plurality of virtual buttons (203) and the triggered one of the first and second auxiliary sensing areas are obtained simultaneously.

2. The mobile terminal according to claim 1, wherein the touch processing chip (202) comprises a plurality of comparators, and each comparator is configured to:
obtain a touch sensing signal for a virtual button of the plurality of virtual buttons (203);
determine whether an intensity of the touch sensing signal is greater than an intensity threshold; and
obtain a trigger of the virtual button of the plurality of virtual buttons (203) if the intensity of the touch sensing signal is greater than the intensity threshold.

3. The mobile terminal according to claim 1 or claim 2, wherein the touch processing chip comprises:
an obtaining module (601), configured to obtain simultaneously the triggers of the at least two of the plurality of virtual buttons and the triggered one of the first and second auxiliary sensing areas; and
a processing module (602), configured to process the trigger of the virtual button of the at least two of the plurality of virtual buttons most distant from the triggered one of the first and second auxiliary sensing areas.

4. The mobile terminal according to claim 3, wherein the obtaining module (601) comprises:
an obtaining sub-module, configured to obtain a touch sensing signal for a virtual button of the plurality of virtual buttons;
a determining sub-module, configured to determine whether an intensity of the touch sensing signal is greater than an intensity threshold; and
a triggering sub-module, configured to obtain the trigger of the virtual button of the plurality of virtual buttons if the intensity of the touch sensing signal is greater than the intensity threshold.

5. A method for processing a virtual button, comprising:
obtaining (501) simultaneously triggers of at least two virtual buttons and one auxiliary sensing area of a first and second auxiliary sensing area, the virtual buttons being located in a control area of a touch panel and the auxiliary sensing areas being located at first and second sides of the virtual buttons and aligned with the virtual buttons; and
processing (502) the trigger of the virtual button of the at least two virtual buttons that is most distant from the triggered auxiliary sensing area of the first and second auxiliary sensing areas.

6. The method according to claim 5, wherein obtaining (501) simultaneously triggers of at least two virtual buttons comprises:
obtaining a touch sensing signal for a virtual button of a plurality of virtual buttons;
determining whether an intensity of the touch sensing signal is greater than an intensity threshold; and
obtaining the trigger of the virtual button of the plurality of virtual buttons if the intensity of the touch sensing signal is greater than the intensity threshold.

7. A non-transitory computer readable storage medium, when executed by a processor of a mobile terminal, causes the mobile terminal to execute a method for processing a virtual button according to claim 5 or 6.

## Patentansprüche

1. Mobil-Endgerät, umfassend:
ein Touchpanel (201), umfassend mehrere virtuelle Tasten (203), die sich in einem Bedienbereich des Touchpanels befinden, einen ersten zusätzlichen Erfassungsbereich und einen zweiten zusätzlichen Erfassungsbereich, wobei der erste zusätzliche Erfassungsbereich und der zweite zusätzliche Erfassungsbereich sich auf einer ersten und einer zweiten Seite der mehreren virtuellen Tasten befinden und auf die mehreren virtuellen Tasten (203) ausgerichtet sind; und
einen Berührungsverarbeitungschip (202), der mit dem Touchpanel (201) verbunden ist und konfiguriert ist zum Verarbeiten einer Auslösung einer virtuellen Taste von wenigstens zwei der mehreren virtuellen Tasten (203), die am weitesten von einem ausgelösten der ersten und der zweiten zusätzlichen Erfassungsbereiche entfernt ist, falls Auslösungen der wenigstens zwei der mehreren virtuellen Tasten (203) und des ausgelösten des ersten und des zweiten zusätzlichen Erfassungsbereichs gleichzeitig erhalten werden.

2. Mobil-Endgerät nach Anspruch 1, wobei der Berührungsverarbeitungschip (202) mehrere Vergleichsschaltungen umfasst und jede Vergleichsschaltung konfiguriert ist zum:
Erhalten eines Berührungserfassungssignals für eine virtuelle Taste der mehreren virtuellen Tasten (203);
Ermitteln, ob eine Intensität des Berührungserfassungssignals größer als eine Intensitätsschwelle ist; und
Erhalten einer Auslösung der virtuellen Taste der mehreren virtuellen Tasten (203), wenn die Intensität des Berührungserfassungssignals größer als die Intensitätsschwelle ist.

3. Mobil-Endgerät nach Anspruch 1 oder Anspruch 2, wobei der Berührungsverarbeitungschip Folgendes umfasst:
ein Erhaltungsmodul (601), das konfiguriert ist zum gleichzeitigen Erhalten der Auslösung der wenigstens zwei der mehreren virtuellen Tasten und des ausgelösten des ersten und des zweiten zusätzlichen Erfassungsbereichs; und
ein Verarbeitungsmodul (602), das konfiguriert ist zum Verarbeiten der Auslösung der virtuellen Taste der wenigstens zwei der mehreren virtuellen Tasten, die am weitesten vom ausgelösten des ersten und des zweiten zusätzlichen Erfassungsbereichs entfernt ist.

4. Mobil-Endgerät nach Anspruch 3, wobei das Erhaltungsmodul (601) Folgendes umfasst:
ein Erhaltungsuntermodul, das zum Erhalten eines Berührungserfassungssignals für eine virtuelle Taste der mehreren virtuellen Tasten konfiguriert ist;
ein Ermittlungsuntermodul, das zum Ermitteln, ob eine Intensität des Berührungserfassungssignals größer als eine Intensitätsschwelle ist, konfiguriert ist; und
ein Auslösungsuntermodul, das zum Erhalten der Auslösung der virtuellen Taste der mehreren virtuellen Tasten, falls die Intensität des Berührungserfassungssignals größer als die Intensitätsschwelle ist, konfiguriert ist.

5. Verfahren zum Verarbeiten einer virtuellen Taste, umfassend:
gleichzeitiges Erhalten (501) von Auslösungen von wenigstens zwei virtuellen Tasten und einem zusätzlichen Erfassungsbereich eines ersten und eines zweiten zusätzlichen Erfassungsbereichs, wobei die virtuellen Tasten sich in einem Bedienbereich eines Touchpanels befinden und die zusätzlichen Erfassungsbereiche sich auf einer ersten und einer zweiten Seite der virtuellen Tasten befinden und auf die virtuellen Tasten ausgerichtet sind; und
Verarbeiten (502) der Auslösung der virtuellen Taste von den wenigstens zwei virtuellen Tasten, die am weitesten von dem ausgelösten zusätzlichen Erfassungsbereich des ersten und des zweiten zusätzlichen Erfassungsbereichs entfernt ist.

6. Verfahren nach Anspruch 5, wobei das gleichzeitige Erhalten (501) von Auslösungen von wenigstens zwei virtuellen Tasten Folgendes umfasst:
Erhalten eines Berührungserfassungssignals für eine virtuelle Taste von mehreren virtuellen Tasten;
Ermitteln, ob eine Intensität des Berührungserfassungssignals größer als eine Intensitätsschwelle ist; und
Erhalten der Auslösung der virtuellen Taste der mehreren virtuellen Tasten, wenn die Intensität des Berührungserfassungssignals größer als die Intensitätsschwelle ist.

7. Nichtflüchtiges computerlesbares Speichermedium, das bei Ausführung durch einen Prozessor eines Mobil-Endgeräts das Mobil-Endgerät zum Ausführen eines Verfahrens zur Verarbeitung einer virtuellen Taste nach Anspruch 5 oder 6 veranlasst.

## Revendications

1. Terminal mobile, comprenant :
un panneau tactile (201), comprenant une pluralité de touches virtuelles (203) située dans une zone de commande du panneau tactile, une première zone de détection auxiliaire et une seconde zone de détection auxiliaire, dans lequel la première zone de détection auxiliaire et la seconde zone de détection auxiliaire sont situées au niveau d'un premier et d'un second côté de la pluralité de touches virtuelles et sont alignées avec la pluralité de touches virtuelles (203) ; et
une puce de traitement de toucher (202), connectée au panneau tactile (220) et configurée pour traiter un déclenchement d'une touche virtuelle d'au moins deux de la pluralité de touches virtuelles (203) qui est la plus distante d'une zone déclenchée des première et seconde zones de détection auxiliaires si des déclenchements des au moins deux de la pluralité de touches virtuelles (203) et de la zone déclenchée des première et seconde zones de détection auxiliaires sont obtenus simultanément.

2. Terminal mobile selon la revendication 1, dans lequel la puce de traitement de toucher (202) comprend une pluralité de comparateurs, et chaque comparateur est configuré pour :
obtenir un signal de détection de toucher pour une touche virtuelle de la pluralité de touches virtuelles (203) ;
déterminer qu'une intensité du signal de détection de toucher est supérieure ou non à un seuil d'intensité ; et
obtenir un déclenchement de la touche virtuelle de la pluralité de touches virtuelles (203) si l'intensité du signal de détection de toucher est supérieure au seuil d'intensité.

3. Terminal mobile selon la revendication 1 ou la revendication 2, dans lequel la puce de traitement de toucher comprend :
un module d'obtention (601), configuré pour obtenir simultanément les déclenchements des au moins deux de la pluralité de touches virtuelles et de la zone déclenchée des première et seconde zones de détection auxiliaires ; et
un module de traitement (602), configuré pour traiter le déclenchement de la touche virtuelle des au moins deux de la pluralité de touches virtuelles la plus distante de la zone déclenchée des première et seconde zones de détection auxiliaires.

4. Terminal mobile selon la revendication 3, dans lequel le module d'obtention (601) comprend :
un sous-module d'obtention, configuré pour obtenir un signal de détection de toucher d'une touche virtuelle de la pluralité de touches virtuelles ;
un sous-module de détermination, configuré pour déterminer qu'une intensité du signal de détection de toucher est ou non supérieure à un seuil d'intensité ; et
un sous-module de déclenchement, configuré pour obtenir le déclenchement de la touche virtuelle de la pluralité de touches virtuelles si l'intensité du signal de détection de toucher est supérieure au seuil d'intensité.

5. Procédé de traitement d'une touche virtuelle, comprenant :
l'obtention (501) de déclenchements simultanés d'au moins deux touches virtuelles et d'une zone de détection auxiliaire d'une première et d'une seconde zone de détection auxiliaire, les touches virtuelles étant situées dans une zone de commande d'un panneau tactile et les zones de détection auxiliaires étant situées au niveau d'un premier et d'un second côté des touches virtuelles et alignées avec les touches virtuelles ; et
le traitement (502) du déclenchement de la touche virtuelle des au moins deux touches virtuelles qui est la plus distante de la zone de détection auxiliaire déclenchée des première et seconde zones de détection auxiliaires.

6. Procédé selon la revendication 5, dans lequel l'obtention (501) de déclenchements simultanés d'au moins deux touches virtuelles comprend :
l'obtention d'un signal de détection de toucher pour une touche virtuelle d'une pluralité de touches virtuelles ;
la détermination qu'une intensité du signal de détection de toucher est supérieure ou non à un seuil d'intensité ; et
l'obtention du déclenchement de la touche virtuelle de la pluralité de touches virtuelles si l'intensité du signal de détection de toucher est supérieure au seuil d'intensité.

7. Support de mémorisation non transitoire lisible par ordinateur qui, à son exécution par un processeur d'un terminal mobile, amène le terminal mobile à exécuter un procédé de traitement d'une touche virtuelle selon la revendication 5 ou 6.
